# EUROPEAN PATENT SPECIFICATION

(11) **EP 1 010 552 B1**
(45) Date of publication and mention of the grant of the patent: **05.11.2003**
(21) Application number: 99124041.7
(22) Date of filing: 09.12.1999
(51) Int. Cl.: B60C 15/00, B60C 9/08, B60C 15/06

(54) **Pneumatic radial tire**
Radialer Luftreifen
Bandage pneumatique radial

(30) Priority: 11.12.1998 JP 35320598
(43) Date of publication of application: 21.06.2000
(73) Proprietor: THE YOKOHAMA RUBBER CO., LTD., Tokyo, 105 (JP)
(72) Inventor: Noji, Hikomitsu, The Yokohama Rubber Co., Ltd., Hiratsuka-shi, Kanagawa-ken (JP)
(74) Representative: HOFFMANN - EITLE

(56) References cited:
- US-A- 4 947 914
- US-A- 5 529 107
- PATENT ABSTRACTS OF JAPAN vol. 017, no. 343 (M-1436), 29 June 1993 (1993-06-29) & JP 05 042803 A (SUMITOMO RUBBER IND LTD), 23 February 1993 (1993-02-23)
- PATENT ABSTRACTS OF JAPAN vol. 018, no. 083 (M-1558), 10 February 1994 (1994-02-10) & JP 05 294116 A (SUMITOMO RUBBER IND LTD), 9 November 1993 (1993-11-09)
- PATENT ABSTRACTS OF JAPAN vol. 013, no. 258 (M-838), 15 June 1989 (1989-06-15) & JP 01 063402 A (YOKOHAMA RUBBER CO LTD:THE), 9 March 1989 (1989-03-09)

## Description

### BACKGROUND OF THE INVENTION:

The present invention relates to a pneumatic radial tire, more particularly to a pneumatic radial tire having driving stability and load durability applicable to a passenger vehicle having high output and high function.

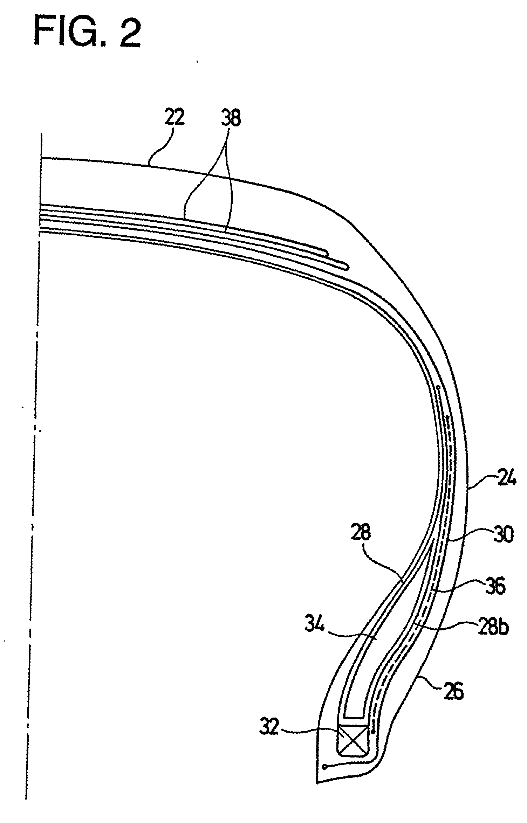

Conventionally, as a radial tire for a passenger vehicle having high function, for example, there has been known a pneumatic radial tire in which carcass layers are of a two-layer structure as shown by Fig. 2. According to the tire shown by Fig. 2, two layers of carcass layers 28 and 30 are arranged to reach a bead portion 26 from a tread portion 22 via a side portion 24. Whereas both end portions of the carcass layer 28 on an inner side are respectively folded back from an inner side to an outer side of a tire to wrap bead fillers 34 around left and right bead cores 32, both end portions of the carcass layer 30 on an outer side are turned down to vicinities of bead toes via inner diameter sides of the bead cores 32 to cover outer sides of fold back portions 28b of the carcass layer 28 on the inner side. Further, reinforcement layers 36 comprising steel cords are arranged between the carcass layer 30 on the outer side and fold back portions 28b of the carcass layer 28 on the inner side. Further, two layers of belt layers 38 are arranged on an outer side of the carcass layer 30 on the outer side at the tread portion 22.

In the meantime, according to passenger vehicles on sale in recent years, a vehicle having high output and high mass of an output of 209 KW (280 horsepower) and a mass of 1.5 t becomes general even with a vehicle having a displacement of 2000 cc, and in the case of the conventional tire structure shown by Fig. 2, it is difficult to ensure driving stability and load durability. However, when as a countermeasure thereagainst, widths of reinforcement layers of a tire are uselessly widened or a number of the layers is increased, a problem arises in which not only an increase in the tire mass is generated, but also the load durability is deteriorated.

JP-A- 05 042 803 discloses a pneumatic radial tire according to the preamble of claim 1.

US-A-5,529,107 discloses a pneumatic radial tire using a carcass layer comprising organic fiber cards, cord angles relative to a peripheral direction of the tire falling into a range of 85 to 90 degrees.

### SUMMARY OF THE INVENTION:

It is an object of the invention to provide a pneumatic radial tire capable of promoting driving stability and load durability applicable to a passenger vehicle having high output and high function without substantially giving rise to an increase in the mass.

In order to achieve the above-described object, according to the invention, there is provided a pneumatic radial tire as claimed in claim 1.

According to the invention, 3 plies of the carcass layers comprising the organic fiber cords are provided, the first and the second carcass layers are folded back from the inner side to the outer side of the tire around the bead cores, the reinforcement layers are arranged on the outer sides of the fold back portions, the third carcass layer is turned down on the outer sides of the reinforcement layers and accordingly, even when a total denier of the organic fiber cords of a total of the carcass layers is made equivalent to that of a conventional pneumatic radial tire for a passenger vehicle having high output and high function using two layers of carcass layers, promotion of higher driving stability and load durability can be achieved. Accordingly, there can be achieved the driving stability and the load durability applicable to a passenger vehicle having high output and high function on sale in recent years.

In this case, "turning down the third carcass layer to cover the outer side of the reinforcement layer" signifies that the third carcass layer is arranged to hang down to reach vicinities of bead toes from the outer sides of the reinforcement layers via the inner diameter sides of the bead cores.

### BRIEF DESCRIPTION OF THE DRAWINGS:

Fig. 1 is a semi-sectional view in a meridian direction showing an embodiment of a pneumatic radial tire according to the invention; and
Fig. 2 is a semi-sectional view in a meridian direction showing an example of a conventional pneumatic tire.

### DESCRIPTION OF THE PREFERRED EMBODIMENTS:

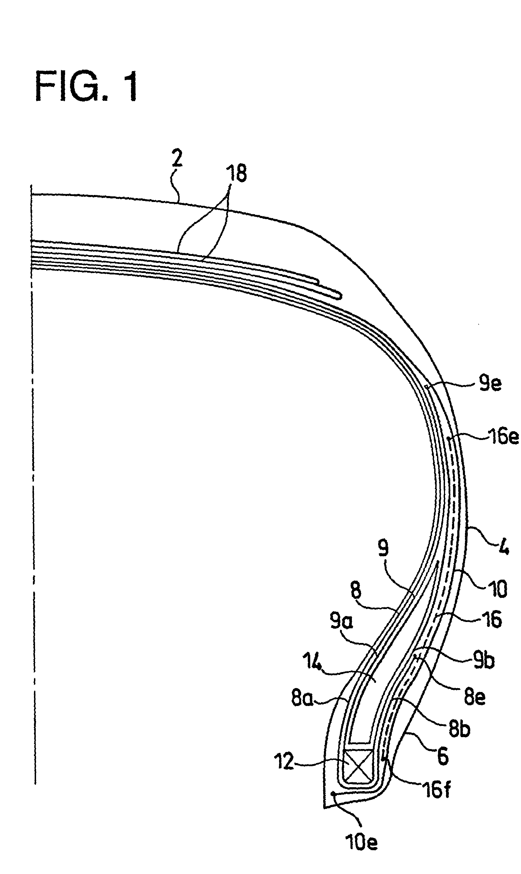

According to a pneumatic radial tire of the invention shown by Fig. 1, there are provided 3 plies of carcass layers 8, 9 and 10 in which a carcass cord comprises a polyester cord of 1000D/2 and a cord angle relative to the peripheral direction of the tire falls in a range of 65 degree through 90 degree. According to these carcass layers 8, 9 and 10, when the cord angle is less than 90 degree, the carcass cords intersect with each other between the plies.

Further, the carcass layers 8, 9 and 10 are arranged to reach bead portions 6 from a tread portion 2 via side portions 4, among the carcass layers, both end portions of a first one and a second one of the carcass layers 8 and 9 which are enumerated from an inner side to an outer side direction of the tire, are folded back from the inner side to the outer side of the tire to wrap bead fillers 14 respectively around left and right bead cores 12. A reinforcement layer 16 is arranged on outer sides of fold back portions 8b and 9b of the first and the second carcass layers 8 and 9. The third carcass layer 10 is turned down to cover an outer side of the reinforcement layer 16.

The fold back portion 9b of the second carcass layer 9 is made longer than the fold back portion 8b of the first carcass layer 8 and a distal end portion 9e of the fold back portion 9b is extended to a side of the tread to be higher than a height of a maximum sectional width portion of the tire (that is, a maximum sectional width position of the tire). In contrast thereto, a distal end portion 8e of the fold back portion 8b of the first carcass layer 8 does not reach the height of the maximum sectional width portion of the tire and is arranged on a bead portion side of the position.

By arranging the fold back portion 9b and the fold back portion 8b in this way, a laminated layer region in which the fold back portion 9b of the second carcass layer 9 is directly laminated on an outer side of a portion of the carcass layer 9 which is not folded back (that is, main body portion) 9a, is widened, therefore, when the cord angle of the second carcass layer 9 relative to the peripheral direction of the tire is less than 90 degree, the flexural rigidity produced by intersecting the carcass cords to each other between the plies in the laminated later region, is increased and accordingly, the driving stability can further be enhanced. Notation 8a designates a portion of the first carcass layer 8 which is not folded back, that is, a main body portion thereof.

The reinforcement layer 16 comprising steel cords are arranged on the outer sides of the fold back portions 8b and 9b of the first and the second carcass layers 8 and 9. According to the reinforcement layer 16, a tread side distal end portion 16e is disposed on the tread side between the tread and the maximum sectional width position of the tire and a bead portion side distal end portion 16f is disposed on the bead portion side. The reinforcement layer 16 is arranged to cover the distal end portion 8e of the fold back portion 8b of the first carcass layer 8 and the bead portion side distal end portion 16f is extended to reach an outer side of the bead core 12.

Further, both end portions of the third carcass layer 10 are turned down to cover outer sides of the reinforcement layers 16 and the distal end portions 10e are extended from inner peripheral sides of the bead cores 12 to vicinities of bead toes.

The tread portion 2 is laminated with two layers of tread layers 18 comprising steel cords such that the cords are intersected with each other between the plies on an outer side of the third carcass layer 10.

According to the pneumatic radial tire of the invention comprising the above-described constitution, when any of 3 plies of the carcass layers 8, 9 and 10 is constituted by, for example, organic fiber cords of 1000D/2, although a number of the plies is increased more than that of the conventional radial tire for a vehicle having high output and high function which is constituted by the carcass layers of a two-layer structure of organic fiber cords substantially of 1500D/2, a total fiber size of the carcass layers as a whole becomes a degree the same as that of the carcass layers of the conventional radial tire and the tire mass is not substantially increased. Further, by using such carcass layers 8, 9 and 10, the both end portions of the first and the second carcass layers 8 and 9 are turned up from the inner side to the outer side of the tire around the bead cores 12, the reinforcement layers 16 are arranged on the outer sides of the fold back portions 8b and 9b, the third carcass layers 14 are turned down and arranged to cover the reinforcement layers 16 further on the outer sides and accordingly, promotion of the driving stability and load durability can significantly be achieved. Therefore, according to the invention, there can be provided the pneumatic radial tire having the driving stability and the load durability applicable also to a passenger vehicle having high output, high function and high load on sale in recent years.

According to the pneumatic radial tire of the invention, as the carcass cords, there can be used cords of organic fibers of nylon, polyester, rayon or aramid fibers which have been used conventionally and polyester fiber cords are particularly preferable. Further, a number of implanting cords (number of ends) is preferably set to 45 through 55 pieces / 50 mm at the tire equator.

The cord angle of the respective carcass layer is 65 degree to 90 degree relative to the peripheral direction of the tire. When the cord angle is less than 90 degree, it is preferable to laminate cords to intersect with each other between the respective carcass layers. In this case, as in the example of Fig. 1, it is preferable to make the fold back portion 9b of the second carcass layer 9 longer than the fold back portion 8b of the first carcass layer 8, thereby, the laminated layer region in which the main body portion 9a and the fold back portion 9b are directly laminated with each other and the carcass cords are intersected with each other between the plies is widened and therefore, the rigidity of the side of the tire is promoted and accordingly, the driving stability and load durability can further be promoted.

Further, as reinforcement cords of the reinforcement layer, there can be used any of reinforcement cords which have been conventionally used in a pneumatic radial tire for a passenger vehicle having high output and high function and particularly, steel cords or aramid fiber cords are preferable.

### EXAMPLE

There are fabricated a tire according to the invention and the conventional tire constructed by a common constitution in which the tire size is 205/50 R16, carcass layers comprise polyester fiber cords, a cord angle of the carcass layers relative to the peripheral direction of the tire is 90 degree and a number of implanting cords is 51/50 mm and by a constitution in which tire structure, a number of plies of the carcass layers and cord fiber size are made to differ therebetween as shown by Table 1.

When the driving stability and JIS load durability have been measured under the above-described conditions in respect of the two kinds of tire, a result of Table 1 is obtained.

### Driving stability:

Five professional test drivers run vehicles on a slalom test course arranged with pylons at constant intervals and the driving stability is measured by a passing time period. An evaluation is carried out by average values of inverse numbers of the passing time periods of the five test drivers and designated by indices with an inverse number of an average value of a passing time period of the conventional tire as 100. The larger the index value, the more excellent is the driving stability.

### JIS load durability:

By a drum tester having a drum diameter of 1707 mm, a load durability test prescribed by JIS D-4230 JATMA is finished, thereafter, load is continuously increased at every 5 hours by 20 % and load when the tire is broken is measured. An evaluation is designated by indices with a measured value of the conventional tire as 100. The larger the index value, the more excellent is the load durability.

**Table 1**

| | Tire structure | Ply No. | Cord fiber size | Layer No. fiber size (total denier) | Driving stability | JIS load durability |
|---|---|---|---|---|---|---|
| Conventional tire | Fig. 2 | 2 | 1500 D/2 | 3000 D | 100 | 100 |
| Invented tire | Fig. 1 | 3 | 1000 D/2 | 3000 D | 140 | 150 |

As is apparent from Table 1, it is known that the invented tire is more excellent than the conventional tire in both of the driving stability and the load durability.

As has been described in details, the pneumatic radial tire according to the invention is constructed by the constitution in which the carcass layers of 3 plies each comprising organic fiber cords are provided, both end portions of the first and the second carcass layers are folded back from the inner side to the outer side of the tire around the bead cores, the reinforcement layers are arranged on the outer sides of the fold back portions and the third carcass layer is turned down to cover the reinforcement layers on the outer sides of the reinforcement layers and accordingly, in comparison with the conventional tire for a passenger vehicle having high output and high function, the driving stability and the load durability are promoted without substantially increasing the mass and there can be provided the driving stability and load durability applicable also to a passenger vehicle having high output and high function on sale in recent years.

## Claims

1. A pneumatic radial tire comprising three plies of carcass layers (8, 9, 10) in which a first one (8) and a second one (9) of the carcass layers, enumerated from an inner side to an outer side direction of the tire in the three plies of the carcass layers (8, 9, 10), comprise organic fiber cords and cord angles of the respective plies (8, 9) relative to a peripheral direction of the tire fall in a range of 65 degrees through 90 degrees;
wherein both end portions (8e, 9e) of said first (8) and second one (9) of the carcass layers are folded back from the inner side to the outer side of the tire respectively around bead cores (12), reinforcement layers (16) are arranged on outer sides of fold back portions (8b, 9b) of the carcass layers (8, 9), and the third one of the carcass layers (10) is turned down to cover outer sides of the reinforcement layers (16),
**characterized in that** the third one of the carcass layers (10) also comprises organic fiber cords having cord angles relative to a peripheral direction of the tire in a range of 65 degrees through 90 degrees, and that a distal end (9e) of the fold back portion (9b) of the second carcass layer (9) is extended to a side of the tread (2) to be higher than a height of a maximum sectional width portion of the tire, and a distal end portion (8e) of the fold back portion (8b) of the first carcass layer (8) does not reach the height of the maximum sectional width portion of the tire and is arranged on a bead portion (6) side of said maximum sectional width portion.

2. The pneumatic radial tire according to claim 1, wherein the reinforcement layer (16) comprises steel cords or aramid fiber cords.

## Patentansprüche

1. Radialluftreifen mit drei Schichten von Karkassenlagen (8, 9, 10), wobei eine erste (8) und eine zweite (9) der drei Schichten der Karkassenlagen (8, 9, 10), gezählt von der Innenseite zur Außenseite des Reifens, Reifenkorden aus organischen Fasern aufweisen, wobei die Winkel der Reifenkorden der jeweiligen Schichten (8, 9) bezüglich einer Umfangsrichtung des Reifens in einen Bereich von 65° bis 90° fallen;
wobei beide Endbereich (8e, 9e) der ersten (8) und der zweiten (9) Karkassenlage von der Innenseite zur Außenseite des Reifens um jeweilige Wulstkerne (12) herum zurückgefaltet sind, Verstärkungslagen (16) auf den Außenseite von zurückgefalteten Bereichen (8b, 9b) der Karkassenlagen (8, 9) angeordnet sind und die dritte der Karkassenlagen (10) heruntergewendet ist, um die Außenseiten der Verstärkungslagen (16) zu bedecken,
**dadurch gekennzeichnet,**
**dass** die dritte der Karkassenlagen (10) ebenfalls Reifenkorden aus organischen Fasern aufweist, deren Winkel bezüglich einer Umfangsrichtung des Reifens in einem Bereich von 65 bis 90° liegt,
**dass** ein distales Ende (9e) des zurückgefalteten Bereichs (9b) der zweiten Karkassenlage (9) zu einer Seite der Lauffläche (2) hin so erstreckt ist, dass es höher liegt als die Höhe einer Stelle, an der der Reifen eine maximale Breite im Querschnitt hat, und
**dass** ein distaler Endbereich (8e) des zurückgefalteten Bereichs (8b) der ersten Karkassenlage (8) die Höhe dieser Stelle des Reifens mit der maximalen Breite im Querschnitt nicht erreicht und bezüglich dieser Stelle mit maximaler Breite im Querschnitt auf der Seite eines Wulstbereichs (6) angeordnet ist.

2. Radialluftreifen nach Anspruch 1, wobei die Verstärkungslage (16) Stahlreifenkorden oder Reifenkorden aus Aramidfasern aufweist.

## Revendications

1. Bandage pneumatique radial comprenant trois plis de nappes de carcasse (8, 9, 10), où une première (8) et une deuxième (9) des nappes de carcasse, énumérées d'une direction de côté interne vers une direction de côté externe du bandage dans les trois plis des nappes de carcasse (8, 9, 10) comprennent des cordes en fibres organiques, et des angles des cordes des plis respectifs (8, 9) relativement à une direction périphérique du bandage se situent dans une plage de 65 degrés à 90 degrés ;
où les deux portions d'extrémité (8e, 9e) desdites première (8) et deuxième (9) nappes de carcasse sont repliées du côté interne vers le côté externe du bandage respectivement autour des tringles (12), des couches de renforcement (16) sont agencées sur les côtés externes des portions repliées (8b, 9b) des couches de carcasse (8, 9), et la troisième des nappes de carcasse (10) est tournée vers le bas pour couvrir les côtés externes des couches de renforcement (16),
**caractérisé en ce que** la troisième des nappes de carcasse (10) comprend également des cordes en fibres organiques présentant des angles de corde relativement à une direction périphérique du bandage dans une plage de 65 degrés à 90 degrés, et **en ce qu'**une extrémité distale (9e) de la portion repliée (9b) de la deuxième nappe de carcasse (9) s'étend vers un côté de la bande de roulement (2) pour être plus haute qu'une hauteur d'une portion de largeur en section maximale du bandage, et une portion d'extrémité distale (8e) de la portion repliée (8b) de la première nappe de carcasse (8) n'atteint pas la hauteur de la portion de largeur en section maximale du bandage et est agencée sur un côté de la portion de talon (6) de ladite portion de largeur en section maximale.

2. Bandage pneumatique radial selon la revendication 1, où la couche de renforcement (16) comprend des cordes en acier ou des cordes en fibres aramides.
